# EUROPÄISCHE PATENTANMELDUNG

(11) **EP 1 083 116 A2**
(43) Veröffentlichungstag der Anmeldung: **14.03.2001**
(21) Anmeldenummer: 00117287.3
(22) Anmeldetag: 17.08.2000
(51) Int. Cl.: B62D 25/24

(54) **Verschlusselement**

(30) Priorität: 08.09.1999 DE 29915819 U
(71) Anmelder: TRW Automotive Electronics & Components GmbH & Co. KG, 67677 Enkenbach/Alsenborn (DE)
(72) Erfinder: Mock, Ralf, 67691 Hochspeyer (DE)
(74) Vertreter: Sties, Jochen, Dipl.-Ing.

(57) **Zusammenfassung**

Die Erfindung betrifft ein Verschlußelement, insbesondere für eine Öffnung in einem Karosserieteil eines Fahrzeugs, mit einem Trägerteil (10) und einem Dichtteil (30). Das Verschlußelement ist dadurch gekennzeichnet, daß das Trägerteil (10) aus einer Verschlußplatte (12) und einem Positionierring (14) besteht, dessen Längsachse mit der Mittelachse der Verschlußplatte zusammenfällt. Das Dichtteil (30) besteht aus einem Dichtring (32) mit angesetztem Dichtflansch (34) und ist im Bereich des Übergangs zwischen Verschlußplatte und Positionierring (14) so angeordnet, daß der Dichtring (32) auf dem Positionierring und der Dichtflansch (34) auf der Verschlußplatte (12) liegt.

## Beschreibung

Die Erfindung betrifft ein Verschlußelement, insbesondere für eine Öffnung in einem Karosserieteil eines Fahrzeugs, mit einem Trägerteil und einem Dichtteil.

Ein solches Verschlußelement ist aus der DE 195 46 160 bekannt. Das Trägerteil ist als napfartiges Deckelteil ausgeführt, das aus einem vergleichsweise harten Kunststoffmaterial besteht. Das Dichtteil besteht aus einem vergleichsweise weichen Kunststoffmaterial, das mit der Fahrzeugkarosserie verklebt werden kann, und erstreckt sich über die gesamte Unterseite des napfartigen Deckelteils.

Die Aufgabe der Erfindung besteht darin, ein Verschlußelement der eingangs genannten Art dahingehend weiterzuentwickeln, daß für das Dichtteil weniger Kunststoffmaterial erforderlich ist.

Zu diesem Zweck ist bei dem erfindungsgemäßen Verschlußelement vorgesehen, daß das Trägerteil aus einer Verschlußplatte und einem Positionierring besteht, dessen Längsachse mit der Mittelachse der Verschlußplatte zusammenfällt, und daß das Dichtteil aus einem Dichtring mit angesetztem Dichtflansch besteht und im Bereich des Übergangs zwischen Verschlußplatte und Positionierring so angeordnet ist, daß der Dichtring auf dem Positionierring und der Dichtflansch auf der Dichtplatte liegt. Der Dichtring erstreckt sich bei dieser Gestaltung lediglich in den Bereichen, in denen er erforderlich ist, also im Bereich des Randes der Öffnung im Karosserieteil des Fahrzeugs sowie im Bereich der Stanzkante dieser Öffnung. Somit wird das Verschlußelement bei minimalem Materialeinsatz mit dem Rand der Öffnung sowie mit der Stanzkante der Öffnung verklebt. Weiterhin ergibt sich, da das Dichtteil mit seinem L-förmigen Querschnitt in den Eckbereich zwischen der Verschlußplatte und dem Positionierring quasi eingepaßt ist, eine hohe Sicherheit gegen ein Fließen des Materials, insbesondere wenn dies sich im erwärmten Zustand befindet.

Gemäß einer bevorzugten Ausführungsform der Erfindung ist vorgesehen, daß der Positionierring mit mehreren sich in radialer Richtung erstreckenden Positioniernasen versehen ist. Die Positioniernasen gewährleisten bei in die zu verschließende Öffnung der Fahrzeugkarosserie eingesetztem Verschlußelement, daß ein im wesentlichen gleichmäßiger Abstand zwischen dem Positionierring und der Stanzkante der zu verschließenden Öffnung vorliegt. Dieser Abstand ermöglicht dem Material des Dichtteils, die Stanzkante gleichmäßig zu umschließen, so daß eine gute Dichtwirkung erhalten wird.

Vorzugsweise ist vorgesehen, daß die Außenseite jeder Positioniernase bündig mit der Außenfläche des Dichtringes abschließt. Dies gewährleistet, daß der Dichtring beim Einsetzen in die zu verschließende Öffnung nicht beschädigt wird, da die Positioniernasen die Stanzkante der zu verschließenden Öffnung über den Dichtring gleiten lassen.

Gemäß der bevorzugten Ausführungsform ist vorgesehen, daß der Positionierring auf seiner Innenseite mit mehreren Verstärkungsstegen versehen ist, die jeweils auf demselben Radius liegen wie die Positioniernasen. Die Verstärkungsstege ermöglichen es, den Positionierring mit verringerter Wandstärke auszuführen, ohne daß sich die Stabilität des Positionierringes vermindert.

Vorzugsweise ist vorgesehen, daß der Positionierring mit mehreren Haltelaschen versehen ist, deren freies Ende der Verschlußplatte in einem vorbestimmten Abstand gegenüberliegt. Die Haltelaschen schnappen beim Einsetzen des Verschlußelementes hinter den Rand der zu verschließenden Öffnung, so daß das Verschlußelement zuverlässig in der Öffnung gehalten ist. Dies ist insbesondere dann vorteilhaft, wenn für das Dichtteil ein Klebstoff gewählt wird, der unter Wärmeeinwirkung expandiert. In diesem Fall verhindern die Haltelaschen, daß das Verschlußelement von dem expandierenden Dichtteil aus der zu verschließenden Öffnung herausgedrückt wird. Als wärmeexpandierbarer Klebstoff wird vorzugsweise ein Material verwendet, das beim Schmelzen nicht fließt, also nicht abläuft oder abtropft. Aus diesem Grunde kann der erfindungsgemäße Verschlußdeckel in jeder Lage, auch vertikal, in die zu verschließende Öffnung eingesetzt werden. Somit ist gewährleistet, daß das Material des Dichtteiles auch bei an sich ungünstigen Einbaulagen die Stanzkante der zu verschließenden Öffnung vollständig umschließt, so daß dort keinerlei Korrosion möglich ist.

Vorteilhafte Ausgestaltungen der Erfindung ergeben sich in den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 in einer Draufsicht ein erfindungsgemäßes Verschlußelement;
- Figur 2 in einem Querschnitt entlang der Ebene II-II von Figur 1 das Verschlußelement von Figur 1;
- Figur 3 in einer Seitenansicht das in eine Öffnung eingesetzte Verschlußelement von Figur 1; und
- Figur 4 in einer perspektivischen Ansicht das Verschlußelement von Figur 1.

Das Verschlußelement ist ein Verbundteil aus zwei Komponenten, nämlich einem Trägerteil 10 und einem Dichtteil 30.

Das Trägerteil 10 besteht aus einem vergleichsweise harten Kunststoff und enthält eine Verschlußplatte 12 sowie einen Positionierring 14. Der Positionierring 14 weist eine Längsachse auf, die mit der Mittelachse M der Verschlußplatte 12 zusammenfällt.

Der Positionierring 14 ist mit drei Positioniernasen 16 versehen, die im gleichen Winkelabstand voneinander angeordnet sind, sich in radialer Richtung erstrecken und über die Außenfläche des Positionierringes 14 hervorstehen. Auf der Innenseite des Positionierringes 14 sind auf demselben Radius wie die Positioniernasen 16, also den Positioniernasen gegenüberliegend, Verstärkungsstege 18 ausgebildet. Die Verstärkungsstege 18 dienen zusammen mit den Positioniernasen 16 dazu, den Positionierring 14 in radialer Richtung zu verstärken. Der Positionierring 14 ist ferner mit drei Haltelaschen 20 versehen. Diese erstrecken sich ausgehend von dem von der Verschlußplatte 12 abgewandten Rand des Positionierringes 14 hin zur Verschlußplatte, so daß jede Haltelasche 20 in einem bestimmten Abstand von der Verschlußplatte endet. Die drei Haltelaschen sind in gleichmäßigen Winkelabständen mittig zwischen den Positioniernasen angeordnet.

Das Dichtteil 30 besteht aus einem Dichtring 32 und einem Dichtflansch 34. Das Dichtteil 30 hat somit in einem radialen Schnitt einen L-förmigen Querschnitt. Die Dichtplatte 34 liegt an der Verschlußplatte 12 des Trägerteils 10 an, während der Dichtring 32 an dem Positionierring 14 des Trägerteils 10 anliegt.

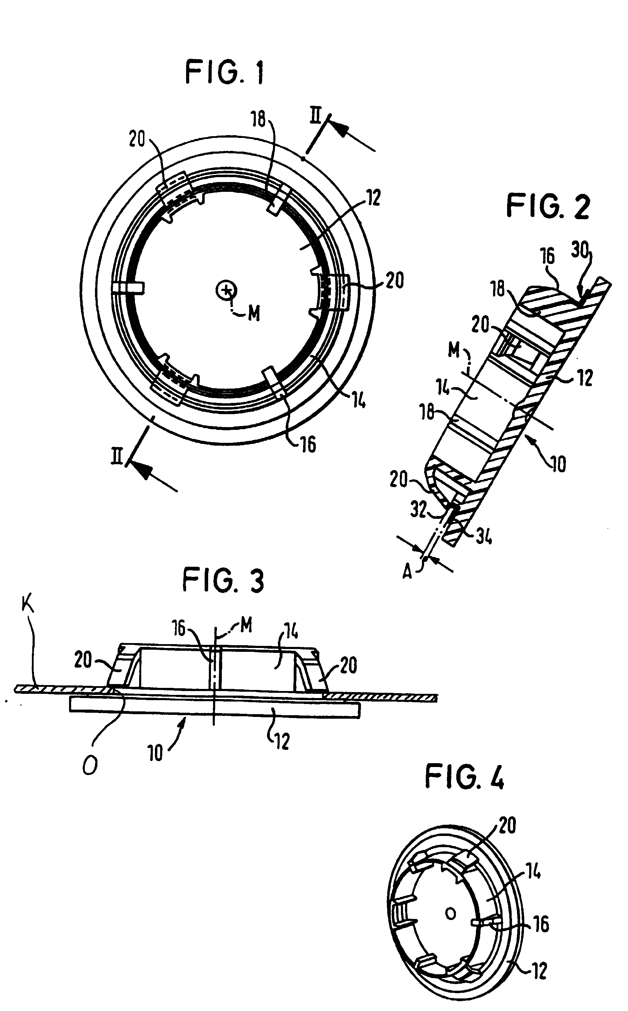

Wie in Figur 2 zu sehen ist, ist die Wandstärke des Dichtringes 32 so an die Abmessungen der Positioniernasen 16 angepaßt, daß die Außenseite jeder Positioniernase 16 bündig mit der Außenfläche des Dichtringes 32 abschließt. Weiterhin ist der Dichtring 32 so bemessen, daß er etwa auf dem Niveau endet, auf dem auch das freie Ende der Haltelaschen 20 liegt. Anders ausgedrückt ist zwischen dem freien Ende der Haltelaschen 20 und der von der Verschlußplatte 12 abgewandten Außenfläche des Dichtflansches 34 ein Abstand A gebildet, der der Höhe des Dichtringes 32 entspricht. Das Dichtteil 30 besteht aus einem wärmeschmelzbaren Klebstoff, der unter Wärmeeinwirkung expandiert.

Das erfindungsgemäße Verschlußelement wird in der folgenden Weise eingesetzt: Zuerst wird das Verschlußelement, insbesondere das Dichtteil 30, erwärmt, so daß sich der Klebstoff, aus dem das Dichtteil besteht, erweicht. Dann wird das Verschlußelement in die zu verschließende Öffnung O eingesetzt, wobei die Positioniernasen 16 gewährleisten, daß der Dichtring 32 beim Einsetzen nicht beschädigt wird. Wenn das Verschlußelement weit genug in die Öffnung eingeschoben ist, schnappen die beim Einsetzen elastisch nach innen gebogenen Haltelaschen 20 wieder in ihre Ursprungsstellung zurück, so daß sie das Verschlußelement in der zu verschließenden Öffnung unverlierbar arretieren. Das in die Öffnung O eines abschnittsweise gezeigten Karosserieteiles K eingesetzte Verschlußelement ist in Figur 3 gezeigt. Der Abstand A, der zwischen dem freien Ende der Haltelaschen 20 und der Außenfläche des Dichtflansches 34 vorhanden ist, ist dabei so an die Wandstärke des Materials angepaßt, in welchem die zu verschließende Öffnung ausgebildet ist, daß der Dichtflansch 34 an dem die Öffnung umgebenden Rand anliegt. Da der das Dichtteil bildende Klebstoff unter Wärmeeinwirkung expandiert, ergibt sich nach dem Einsetzen des Verschlußelementes in die Öffnung O eine hermetisch dichte Verbindung zwischen dem Verschlußelement und dem Material, in welchem die zu verschließende Öffnung ausgebildet ist. Dies wird insbesondere gewährleistet von dem Dichtring 32, der die Stanzkante der zu verschließenden Öffnung umgreift und an dieser anliegt. Dadurch ergibt sich zusätzlich ein Korrosionsschutz der Stanzkante.

## Patentansprüche

1. Verschlußelement, insbesondere für eine Öffnung in einem Karosserieteil eines Fahrzeugs, mit einem Trägerteil (10) und einem Dichtteil (30),
dadurch gekennzeichnet, daß das Trägerteil (10) aus einer Verschlußplatte (12) und einem Positionierring (14) besteht, dessen Längsachse mit der Mittelachse der Verschlußplatte zusammenfällt, und daß das Dichtteil (30) aus einem Dichtring (32) mit angesetztem Dichtflansch (34) besteht und im Bereich des Übergangs zwischen Verschlußplatte und Positionierring (14) so angeordnet ist, daß der Dichtring (32) auf dem Positionierring und der Dichtflansch (34) auf der Verschlußplatte (12) liegt.

2. Verschlußelement nach Anspruch 1, dadurch gekennzeichnet, daß der Positionierring (14) mit mehreren sich in radialer Richtung erstreckenden Positioniernasen (16) versehen ist.

3. Verschlußelement nach Anspruch 2, dadurch gekennzeichnet, daß die Außenseite jeder Positioniernase (16) bündig mit der Außenfläche des Dichtrings (32) abschließt.

4. Verschlußelement nach einem der Ansprüche 2 und 3, dadurch gekennzeichnet, daß der Positionierring (14) auf seiner Innenseite mit mehreren Verstärkungsstegen (18) versehen ist, die jeweils auf demselben Radius liegen wie die Positioniernasen (16).

5. Verschlußelement nach einem der vorhergehenden Ansprüche, dadurch gekennzeichnet, daß der Positionierring (14) mit mehreren Haltelaschen (20) versehen ist, deren freies Ende der Verschlußplatte in einem vorbestimmten Abstand gegenüberliegt.

6. Verschlußelement nach einem der vorhergehenden Ansprüche, dadurch gekennzeichnet, daß das Dichtteil (30) aus einem wärmeschmelzbaren, expandierbaren Kunststoff besteht.
